# EUROPEAN PATENT SPECIFICATION

(11) **EP 3 677 803 B1**
(45) Date of publication and mention of the grant of the patent: **22.09.2021**
(21) Application number: 18850264.5
(22) Date of filing: 16.08.2018
(51) Int. Cl.: F16C 19/16, B23B 19/02, F16C 33/80, F16C 19/54, F16C 33/78

(54) **ANGULAR BALL BEARING, BEARING DEVICE, AND SPINDLE DEVICE**
SCHRÄGKUGELLAGER, LAGERVORRICHTUNG UND SPINDELVORRICHTUNG
ROULEMENT À BILLES OBLIQUE, DISPOSITIF DE ROULEMENT ET DISPOSITIF À BROCHE

(30) Priority: 01.09.2017 JP 2017168552; 22.01.2018 JP 2018008244
(43) Date of publication of application: 08.07.2020
(73) Proprietor: NSK Ltd., Tokyo 141-8560 (JP)
(72) Inventor: IWASAKI, Kazumi, Fujisawa-shi Kanagawa 251-8501 (JP); KATSUNO, Yoshiaki, Fujisawa-shi Kanagawa 251-8501 (JP)
(74) Representative: Grünecker Patent- und Rechtsanwälte PartG mbB
(86) International application number: PCT/JP2018/030451
(87) International publication number: WO 2019/044528

(56) References cited:
- EP-A1- 3 173 644
- JP-A- H09 210 072
- JP-A- 2001 090 739
- JP-A- 2002 346 861
- JP-A- 2005 299 761
- JP-A- 2005 299 761
- JP-A- 2009 275 719
- JP-A- 2013 142 414
- JP-A- 2013 194 886
- JP-A- 2013 194 886
- JP-A- 2014 020 481
- JP-A- 2014 020 481

## Description

### Technical Field

The present invention relates to an angular contact ball bearing, a bearing device, and a spindle device, and in particular, relates to an angular contact ball bearing, a bearing device, and a spindle device applied to motors, spindles of cutting-type machine tools (such as lathes, milling machines and machining centers), spindles of grinding machines, and high-frequency spindles.

### Background Art

In order to satisfy required characteristics such as rolling fatigue life and high rigidity, a bearing arrangement in which a plurality of cylindrical roller bearings or angular contact ball bearings are used is employed in a spindle of a machine tool. In particular, an angular contact ball bearing in which grease sealed is often used in a spindle device that rotates at a high speed, such as a high-frequency spindle or a grinding machine. A sealing member is attached to such an angular contact ball bearing to prevent scattering of the grease to the outside or entry of a cutting fluid from the outside (see, for example, Patent Literature 1).

A disclosed sealing member provided in the ball bearing is provided with an inclined portion inclined toward a corresponding inner/outer ring shoulder surface at an inner/outer peripheral end portion of the sealing member so as to reduce torque by effectively attaching the grease to the sealing member (see, for example, Patent Literature 2). Further, a known ball bearing includes a sealing member whose inner end portion is formed to be bent (see, for example, Patent Literatures 3 and 4).
An angular contact ball bearing according to the preamble of claim 1 is known from JP 2009 275 719 A.

### Citation List

### Patent Literature

Patent Literature 1: JP-A-2006-46609
Patent Literature 2: JP-A-2003-336650
Patent Literature 3: JP-A-2005-291304
Patent Literature 4: JP-A-H11-287255

### Summary of Invention

### Technical Problem

A known spindle device according to related art is provided with an air flow path for air purge which is opened in a gap between a housing and a rotating shaft on a side of a bearing, so as to prevent cutting water and dust such as cutting chips from entering the inside of the bearing.

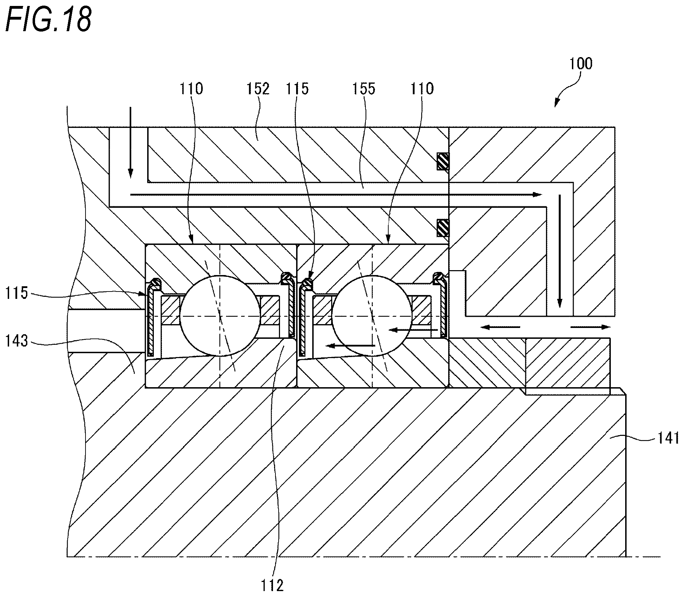

Fig. 18 is a cross-sectional view of a spindle device in which an angular contact ball bearing according to the related art is combined in tandem as the front bearing. In this spindle device 100, a part of air supplied from an air flow path for air purge 155 formed in a housing 152 flows into a pair of angular contact ball bearings 110 which are combined in tandem. In each angular contact ball bearing 110, a sealing member 115 provided on a bearing back surface side may be deformed by the air and contact with an inner ring 112 of the adjacent angular contact ball bearing 110 and a step portion 143 of a rotating shaft 141. In this case, there is a possibility such that a failure such as an increase in torque or damage to the sealing member 115 occurs.

The sealing member 115 attached to the angular contact ball bearing 110 may be inclined due to attachment deviation with respect to a sealing groove, or due to a caulking error in a case where the sealing member 115 is a metal seal. For this reason, there is a possibility such that the sealing member 115 provided on the bearing back surface side also contact the inner ring 112 of the adjacent angular contact ball bearing 110 or the step portion 143 of the rotating shaft 141 due to attachment factors of the sealing member 115.

Meanwhile, although it is considered that the contact between the sealing member and the inner ring of the adjacent bearing may be prevented by setting the entire sealing member on an inner side (by displacing the sealing member by parallel movement in an axial center direction of the bearing), the sealing member may interfere with a cage.

In each ball bearing described in Patent Literatures 2 to 4, the inclined portion is provided at inner and outer peripheral end portions of the sealing member or an inner end portion of the sealing member, a bent position of the inclined portion is not specifically specified, and contact between the cage and an adjacent member is not considered.

The present invention has been made in view of the above-described problems, an object thereof is to provide an angular contact ball bearing, a bearing device, and a spindle device which can reliably prevent the sealing member from contacting the inner ring of the adjacent bearing, a member such as an inner ring spacer which is adjacent to the inner ring, and the cage, in particular, reduce influence of airflow flowing into the bearing due to the air purge.

### Solution to Problem

The object of the present invention is achieved by an angular contact ball bearing according to claim 1, a bearing device according to claim 5 or 8 and a spindle device according to claim 9 or 10. Preferred configurations of the angular contact ball bearing and bearing device are defined respectively according to claims 2 to 13 and 6 to 7.

### Effects of Invention

According to the angular contact ball bearing and the bearing device according to the present invention, the counter bore is formed in the inner ring on the bearing back surface side with respect to the inner ring raceway surface, the minimum outer diameter of the counter bore is smaller than the outer diameter of the shoulder portion provided on the bearing front surface side with respect to the inner ring raceway surface, and the sealing member fixed to the bearing back surface side of the outer ring includes the disk portion and the at least one annular inclined portion inclined linearly or curvedly inward in the radial direction from the disk portion toward the axial center of the angular contact ball bearing. The maximum diameter of the inclined portion on the axial direction inner surface side of the sealing member is smaller than the inner diameter of the bearing back surface side end surface of the cage, and the maximum diameter of the inclined portion on the axial direction outer surface side of the sealing member is larger than the outer diameter of the shoulder portion on the bearing front surface side of the inner ring. Accordingly, for example, even when a position of the sealing member varies when the sealing member is attached to the outer ring, the inclined portion can be prevented from interfering with the cage. For example, even if the sealing member is deformed or inclined in the axial direction in a case where the angular contact ball bearings are combined in tandem, or where an annular member such as an inner ring spacer or the step portion of the rotating shaft is adjacent to the bearing back surface side, the contact between the sealing member and the member disposed adjacent to the bearing back surface side of the angular contact ball bearing can be prevented, and the increase in the torque and the damage to the sealing member can be prevented.

According to the spindle device according to the present invention, the front bearing and the rear bearing to which the angular contact ball bearing of the present invention is applied are combined in back-to-back arrangement with each other with the constant pressure preload, and the air flow path is opened in the space between the housing and the rotating shaft in the housing on the bearing front surface side of the front bearing to supply the air from the outside. Accordingly, even when the sealing member on the bearing back surface side of the front bearing is deformed or inclined in the axial direction due to the air from the air flow path, the contact of the sealing member can be prevented, and the increase in the torque and the damage to the sealing member can be prevented.

### Brief Description of Drawings

[Fig. 1] Fig. 1 is a main part cross-sectional view of an angular contact ball bearing according to a first embodiment of the present invention.
[Fig. 2] Fig. 2 is a main part enlarged view of a sealing member and an outer peripheral surface of an inner ring of the angular contact ball bearing shown in Fig. 1.

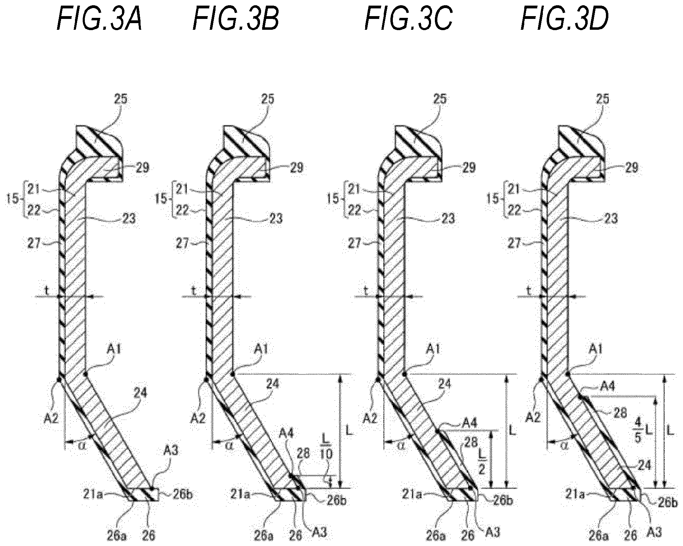

[Fig. 3] Fig. 3A is a cross-sectional view of a sealing member of an angular contact ball bearing according to a first modification of the first embodiment. Fig. 3B is a cross-sectional view of a sealing member of an angular contact ball bearing according to a second modification of the first embodiment. Fig. 3C is a cross-sectional view of a sealing member of an angular contact ball bearing according to a third modification of the first embodiment. Fig. 3D is a cross-sectional view of a sealing member of an angular contact ball bearing according to a fourth modification of the first embodiment.
[Fig. 4] Fig. 4 is a cross-sectional view of a bearing device and a spindle device including angular contact ball bearings combined in tandem.
[Fig. 5] Fig. 5 is a cross-sectional view of an angular contact ball bearing according to a second embodiment of the present invention.
[Fig. 6] Fig. 6 is a cross-sectional view of an angular contact ball bearing according to a third embodiment of the present invention.
[Fig. 7] Fig. 7 is a cross-sectional view of an angular contact ball bearing according to a fourth embodiment of the present invention.
[Fig. 8] Fig. 8 is a cross-sectional view of an angular contact ball bearing according to a fifth embodiment of the present invention.
[Fig. 9] Fig. 9 is a cross-sectional view of an angular contact ball bearing according to a sixth embodiment of the present invention.
[Fig. 10] Fig. 10 is a cross-sectional view taken along X-X of Fig. 9.
[Fig. 11] Fig. 11 is a cross-sectional view of an angular contact ball bearing according to a seventh embodiment of the present invention.
[Fig. 12] Fig. 12 is a cross-sectional view of an angular contact ball bearing according to an eighth embodiment of the present invention.
[Fig. 13] Fig. 13 is a cross-sectional view of a first modification of a bearing device according to the present invention to which the angular contact ball bearing according to the first embodiment is applied.
[Fig. 14] Fig. 14 is a cross-sectional view of a second modification of the bearing device according to the present invention to which the angular contact ball bearing according to the first embodiment is applied.
[Fig. 15] Fig. 15 is a cross-sectional view of a third modification of the bearing device according to the present invention to which the angular contact ball bearing according to the first embodiment is applied.
[Fig. 16] Fig. 16 is a cross-sectional view of a first modification of a spindle device according to the present invention to which the angular contact ball bearing according to the first embodiment is applied.
[Fig. 17] Fig. 17 is a cross-sectional view of a second modification of the spindle device according to the present invention to which the angular contact ball bearing according to the first embodiment is applied.
[Fig. 18] Fig. 18 is a cross-sectional view of a spindle device in which angular contact ball bearings according to related art are combined in tandem.

### Description of Embodiments

Hereinafter, embodiments of an angular contact ball bearing, a bearing device, and a spindle device according to the present invention will be described in detail with reference to the drawings.

### (First Embodiment)

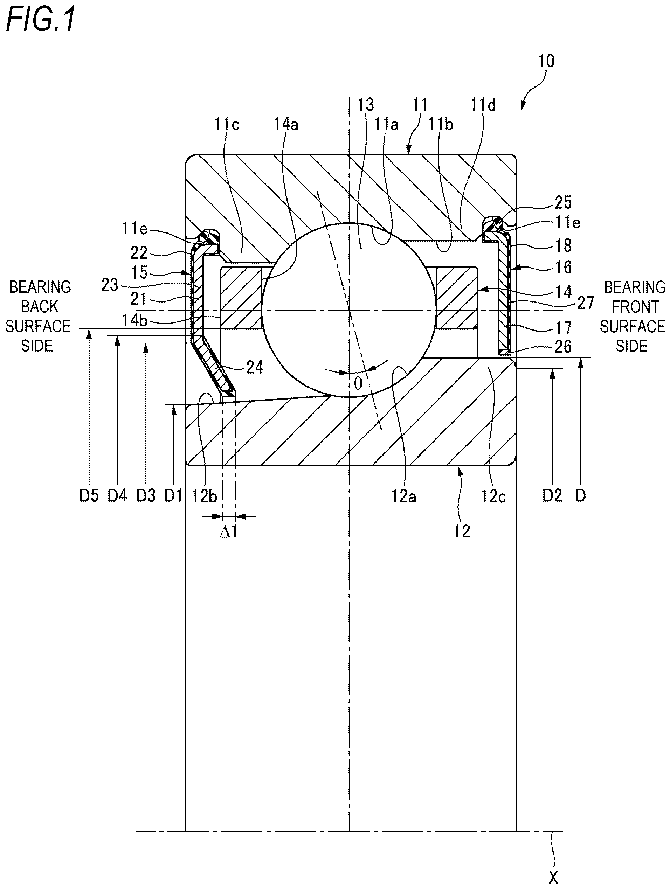

As shown in Fig. 1, an angular contact ball bearing 10 according to a first embodiment includes an outer ring 11, which includes an outer ring raceway surface 11a on an inner peripheral surface thereof; an inner ring 12, which includes an inner ring raceway surface 12a on an outer peripheral surface thereof; a plurality of balls 13, which are arranged to roll freely with a predetermined contact angle θ between the outer ring raceway surface 11a and the inner ring raceway surface 12a; a cage 14 which is configured to hold the plurality of balls 13 in a manner that enables the balls 13 to roll freely; and a pair of non-contact type sealing members 15, 16 which are attached to two axial direction sides of the outer ring 11 and which is configured to cover an opening between the outer ring 11 and the inner ring 12.

The outer ring 11 is formed with a counter bore 11b having a substantially uniform inner diameter on a bearing front surface side with respect to the outer ring raceway surface 11a (a front surface side of the outer ring 11). For this reason, an inner diameter of a shoulder portion 11c on a bearing back surface side with respect to the outer ring raceway surface 11a (a back surface side of the outer ring 11) is smaller than an inner diameter of a shoulder portion 11d on the bearing front surface side with respect to the outer ring raceway surface 11a.

Meanwhile, the inner ring 12 is formed with a tapered-shaped counter bore 12b whose diameter is reduced toward an axial direction end portion on the bearing back surface side with respect to the inner ring raceway surface 12a (a front surface side of the inner ring 12). For this reason, a minimum outer diameter D1 of the counter bore 12b is smaller than an outer diameter D of a shoulder portion 12c provided on the bearing front surface side with respect to the inner ring raceway surface 12a (a back surface side of the inner ring 12).

The cage 14 is an outer ring guide type cage made of synthetic resin or metal, for example, which is guided by the shoulder portion 11c on the bearing back surface side, and a pocket 14a which is configured hold the balls 13 is formed in a cylindrical shape.

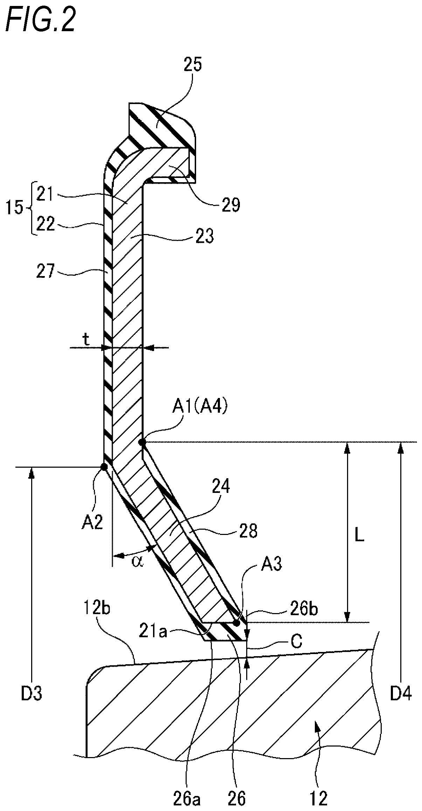

As shown in Figs. 1 and 2, the pair of sealing members 15, 16 includes core metals 21, 17 which are formed by metal plates in annular shapes, and elastic portions 22, 18 which are made of elastic materials such as rubber or elastomer and fixed to the core metals 21, 17. The elastic portions 22, 18 include an outer peripheral edge portion 25 which covers outer peripheral sides of the core metals 21, 17 and slightly protrudes outward in a radial direction, a lip portion 26 which covers inner peripheral sides of the core metals 21, 17, and a side wall portion 27 which connects the outer peripheral edge portion 25 and the lip portion 26. In the present embodiment, the sealing member 15 on the bearing back surface side is formed with an inner wall portion 28 made of the elastic portion 22 on an inner side surface of the core metal 21 configuring an inclined portion 24 described below.

The pair of sealing members 15, 16 is fixed by press-fitting the outer peripheral edge portion 25 into an attachment groove 11e formed at two axial direction end portions of the outer ring 11.

An inner diameter surface of the sealing member 15 faces an outer peripheral surface of the counter bore 12b on the bearing back surface side of the inner ring 12 in a non-contact manner, so as to form a labyrinth seal. An inner diameter surface of the sealing member 16 faces an outer peripheral surface of the shoulder portion 12c on the bearing front surface side of the inner ring 12 in a non-contact manner, so as to form a labyrinth seal.

The sealing member 15 on the bearing back surface side includes: a disk portion 23 extending in the radial direction from a portion fixed to the attachment groove 11e; and an annular inclined portion 24 inclined linearly inward in the radial direction from the disk portion 23 toward an axial center (a right direction in Fig. 1) of the angular contact ball bearing 10 with an inclination angle α. The core metal 21 is provided over the disk portion 23 and the inclined portion 24, is bent outward in the radial direction of the disk portion 23, and includes a bent portion 29 located on an inner side of the outer peripheral edge portion 25.

Here, a maximum diameter D3 of the inclined portion 24 on an axial direction outer surface side (left side surfaces in Figs. 1 and 2) of the sealing member 15 (that is, the diameter D3 of a circle at a boundary point A2 between the disk portion 23 and the inclined portion 24 on the axial direction outer surface side) is larger than the outer diameter D of the shoulder portion 12c on the bearing front surface side of the inner ring 12 (D3 > D). Accordingly, even when the sealing member 15 is deformed or inclined in the axial direction, for example, interference between the sealing member 15 and a member adjacent to the bearing back surface side (such as the inner ring 12 of the other angular contact ball bearing 10 combined in tandem, an inner ring spacer, an oil seal, or a step portion of the rotating shaft) can be prevented, and an increase in torque and damage to the sealing member 15 caused by the interference can be prevented. As shown in Fig. 1, when a corner Round portion or a chamfered portion is formed at an axial direction end portion of the shoulder portion 12c, the maximum diameter D3 of the inclined portion 24 on the axial direction outer surface side is larger than a diameter D2 of an intersection between the corner Round portion or the chamfered portion and an axial direction end surface, thereby achieving the above effect.

A maximum diameter D4 of the inclined portion 24 on an axial direction inner surface side (right side surfaces in Figs. 1 and 2) of the sealing member 15 (that is, the diameter D4 of a circle at a boundary point A1 between the disk portion 23 and the inclined portion 24 on the axial direction inner surface side) is smaller than an inner diameter D5 of the cage 14, more strictly, than the inner diameter D5 of a bearing back surface side end surface 14b of the cage 14 (D4 < D5). Accordingly, even when the sealing member 15 is deformed or inclined in the axial direction, interference between the sealing member 15 and the cage 14 can be prevented, and the increase in the torque and the damage to the sealing member 15 caused by the interference can be prevented.

The maximum diameter D3 of the inclined portion 24 on the axial direction outer surface side of the sealing member 15 is set to be smaller than the maximum diameter D4 of the inclined portion 24 on the axial direction inner surface side (the right side surface in Fig. 1) of the sealing member 15. Accordingly, an axial direction thickness of the inclined portion 24 of the sealing member 15 is ensured, and deformation of the sealing member 15 is reduced (D3 < D4).

In the present embodiment, the inclination angle α of the inclined portion 24 is set to be larger than 0° and equal to or less than 45° (0° < α ≦ 45°). Accordingly, strength of the sealing member 15 against deformation can be ensured. The inclination angle α is preferably 30° or more and 45° or less (30° ≦ α ≦ 45°). By setting the inclination angle α to 30° or more, when the sealing member 15 is deformed on an inner diameter side, circumferential stress (compressive force) acting on the inclined portion 24 becomes large, thus deformation is difficult to occur.

An inner diameter end surface 26a of the lip portion 26 is formed as a flat surface which is substantially tandem to a revolution axis of the ball 13. An inner diameter end surface 21a of the core metal 21 is also processed into a flat surface substantially tandem to the revolution axis of the ball 13 after the inclined portion 24 is bent. If the inclination angle α of the inclined portion 24 is larger than 45°, an angle of a tip end of an inner diameter portion of the core metal 21 becomes small (more acute), and burr is likely to occur during molding of the core metal 21.

Since the inner diameter end surface 26a of the lip portion 26 is formed as the flat surface which is substantially tandem to a revolution axis X of the ball 13, a labyrinth seal is formed in a long shape in the axial direction to improve a labyrinth effect.

To minimize a labyrinth clearance, a clearance C between a bearing front surface side corner portion of the inner diameter end surface 26a of the lip portion 26 and an outer peripheral surface of the inner ring 12 is set such that a ratio of the minimum outer diameter D1 of the counter bore 12b of the inner ring 12 to the clearance C (C /D1) is 0.0005 or more and 0.03 or less (0.0005 ≦ C / D1 ≦ 0.03). Accordingly, a labyrinth seal, whose sealing performance can be improved while maintaining a good lubricity, can be ensured.

Further, by setting a ratio of the minimum outer diameter D1 of the counter bore 12b of the inner ring 12 to a plate thickness t of the core metal 21 (t / D1) to be 0.0003 or more and 0.3 or less (0.0003 ≦ t / D1 ≦ 0.3), the strength against deformation and workability of the sealing member 15 can both be ensured.

As shown in Fig. 1, the bearing back surface side end surface 14b of the cage 14 and a bearing front surface side end portion 26b of the lip portion 26 overlap each other by Δ1 when viewed from the radial direction (Δ1 is zero or more: Δ1 ≧ 0). For this reason, since grease pushed out from the cage 14 and adhering to an inner surface of the sealing member 15 is close to a rolling contact portion, lubricating oil components of the grease can be easily supplied to the rolling contact portion, and lubrication performance can be improved.

In the sealing member 15, an inner tip end A4 of the elastic portion 22 may be located at any position from the boundary point A1 between the disk portion 23 and the inclined portion 24 on the axial direction inner surface side to a boundary point A3 between the inclined portion 24 and the inner diameter end surface 21a of the core metal 21. That is, as shown in Fig. 3A, the sealing member 15 may not include the inner wall portion 28. Alternatively, when a radial direction height from the boundary point A1 to the boundary point A3 is L, a radial height of the inner wall portion 28 from the boundary point A3 may be L / 10 as shown in Fig. 3B, L / 2 as shown in Fig. 3C, or 4L / 5 as shown in Fig. 3D. In the cases of Figs. 3A to 3D, the boundary point A1 between the disk portion 23 and the inclined portion 24 on the axial direction inner surface side is configured by the core metal 21.

However, the radial height of the inner wall portion 28, that is, a position of the inner tip end A4, is preferably in a range of at least L / 10 to L / 2, and the radial height is more preferably L / 10 as shown in Fig. 3B. Reasons for this arrangement are as follows. By providing the inner wall portion 28, rubber can be prevented from being peeled off due to contact with the edge-shaped boundary point A3 when handling the seal alone. Since the length of the inner wall portion 28 which wraps around an inner side surface of the inclined portion 24 is short, unevenness is less likely to occur at a position of the tip end A4 of the elastic portion 22 during vulcanization molding, thus the rubber can be prevented from peeling off partially when reaching the boundary point A1.

Although a shape of the sealing member 16 on the bearing front surface side is not particularly limited, as shown in Fig. 1, the sealing member 16 is not provided with the inclined portion 24 and is formed in a flat disk shape toward an inner side in the radial direction.

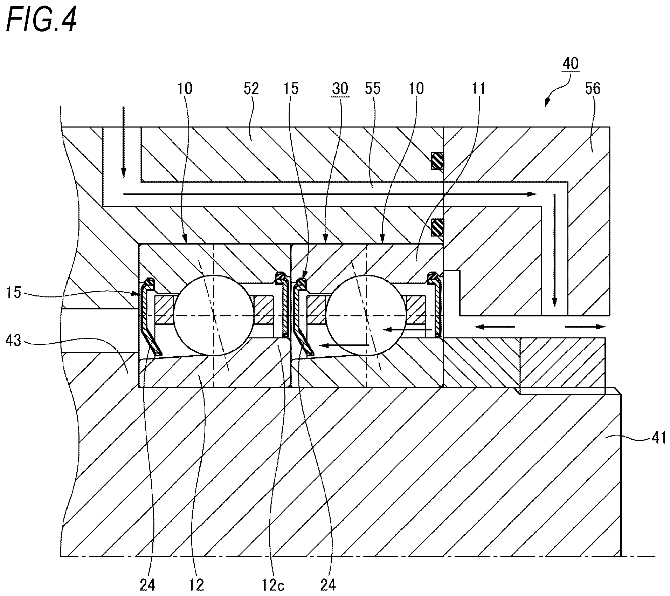

Fig. 4 is a cross-sectional view of a spindle device 40 using a bearing device 30 in which such angular contact ball bearings 10 are combined in tandem. In the spindle device 40, a pair of angular contact ball bearings 10 that are combined in tandem are disposed between a rotating shaft 41 and a housing 52. A front outer ring retainer 56, which is configured to position the outer ring 11 of the angular contact ball bearing 10, is attached to the housing 52. An air flow path for air purge 55, which is opened in space between the housing 52 and the rotating shaft 41 and supplies air from the outside, is formed in the housing 52 and the front outer ring retainer 56 on the bearing front surface side of the angular contact ball bearing 10.

In the bearing device 30, the sealing member 15 disposed on the bearing back surface side of the angular contact ball bearing 10 also includes the inclined portion 24, the maximum diameter D4 of the inclined portion 24 on the axial direction inner surface side of the sealing member 15 is smaller than the inner diameter D5 of the bearing back surface side end surface 14b of the cage 14, and the maximum diameter D3 of the inclined portion 24 on the axial direction outer surface side of the sealing member 15 is larger than the outer diameter D of the shoulder portion 12c on the bearing front surface side of the inner ring 12 of the angular contact ball bearing 10. For this reason, even when the sealing member 15 is deformed or inclined in the axial direction, the sealing member 15 does not interfere with the inner ring 12 (the shoulder portion 12c on the bearing front surface side) of the angular contact ball bearing 10 disposed on the bearing back surface side or a step portion 43 of the rotating shaft 41. Further, interference between the sealing member 15 and the cage 14 of the angular contact ball bearing 10 is reliably prevented, and the increase in the torque and the damage to the sealing member 15 caused by the interference can be reduced.

Even when a part of the air supplied from the air flow path 55 flows into the pair of angular contact ball bearings 10 that are combined in tandem and the sealing member 15 provided on the bearing back surface side is deformed, the interference between the sealing member 15 and the inner ring 12 of the adjacent angular contact ball bearing 10 or the step portion 43 of the rotating shaft 41 can be prevented due to the configuration of the inclined portion 24 as described above, and the increase in the torque and the damage to the sealing member 15 can be reduced.

As described above, according to the angular contact ball bearing 10 according to the present embodiment, the inner ring 12 is formed with the counter bore 12b on the bearing back surface side with respect to the inner ring raceway surface 12a, and the minimum outer diameter D1 of the counter bore 12b is smaller than the outer diameter D of the shoulder portion 12c on the bearing front surface side with respect to the inner ring raceway surface 12a. The sealing member 15 fixed to the bearing back surface side of the outer ring 11 includes the disk portion 23 and the annular inclined portion 24 inclined inward in the radial direction from the disk portion 23 toward the axial center of the angular contact ball bearing 10. The maximum diameter D4 of the inclined portion 24 on the axial direction inner surface side of the sealing member 15 is smaller than the inner diameter D5 of the bearing back surface side end surface 14b of the cage 14, and the maximum diameter D3 of the inclined portion 24 on the axial direction outer surface side of the sealing member 15 is larger than the outer diameter D of the shoulder portion 12c on the bearing front surface side of the inner ring 12 of the angular contact ball bearing 10. Therefore, for example, even when the position of the sealing member 15 varies when the sealing member 15 is attached to the outer ring 11, the inclined portion 24 can be prevented from interfering with a member disposed adjacent to the inner ring 12 or the cage 14. For example, when the angular contact ball bearings 10 are combined in tandem, even when the sealing member 15 is deformed or inclined in the axial direction, contact between the sealing member 15 and the inner ring 12 of the other adjacent angular contact ball bearing 10 can be prevented, and the increase in the torque and the damage to the sealing member 15 can be prevented.

Since the maximum diameter D4 of the inclined portion 24 on the axial direction inner surface side of the sealing member 15 is larger than the maximum diameter D3 of the inclined portion 24 on the axial direction outer surface side of the sealing member 15, the axial direction thickness of the inclined portion 24 of the sealing member 15 is ensured, and deformation of the sealing member 15 is reduced.

Since the cage 14 and the inclined portion 24 of the sealing member 15 overlap each other when viewed from the radial direction, the grease pushed out from the cage 14 and adhering to the inner surface of the sealing member 15 is close to the rolling contact portion, and the lubricating oil components of the grease can be easily supplied to the rolling contact portion, thereby improving the lubrication performance.

### (Second Embodiment)

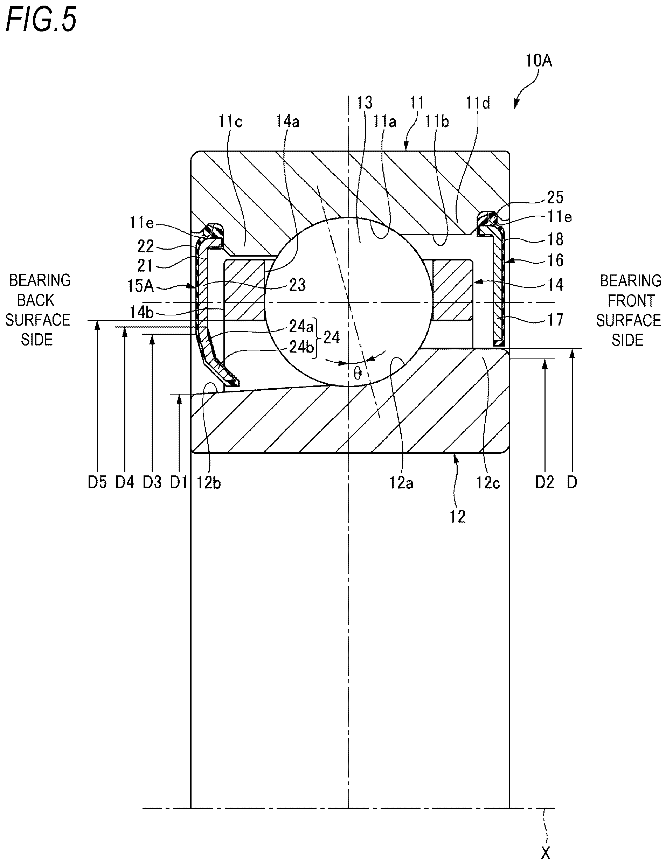

Fig. 5 is a cross-sectional view of an angular contact ball bearing according to a second embodiment. A shape of a sealing member 15A on the bearing back surface side of an angular contact ball bearing 10A according to the second embodiment is different from that of the angular contact ball bearing 10 according to the first embodiment. Since other parts are the same as those of the angular contact ball bearing 10 according to the first embodiment, the same parts are denoted by the same or corresponding reference numerals, and the description thereof will be simplified or omitted.

The sealing member 15A according to the present embodiment is formed by bending the inclined portion 24 in two stages, and includes a first inclined portion 24a and a second inclined portion 24b from an outer diameter side. In this case, the maximum diameter D3 of the first inclined portion 24a on the axial direction outer surface side (a left side surface in Fig. 5) of the sealing member 15A is also larger than the outer diameter D of the shoulder portion 12c on the bearing front surface side of the inner ring 12. The maximum diameter D4 of the first inclined portion 24a on the axial direction inner surface side of the sealing member 15A is smaller than the inner diameter D5 of the bearing back surface side end surface 14b of the cage 14.

Accordingly, even when the sealing member 15A is deformed or inclined in the axial direction, the sealing member 15A can be prevented from interfering with the inner ring 12 of the other adjacent angular contact ball bearing 10 disposed in tandem on the bearing back surface side, the annular member such as the inner ring spacer or the oil seal, the step portion of the rotating shaft, or the cage 14 of the angular contact ball bearing 10A, and the increase in the torque and the damage to the sealing member 15A can be prevented.

### (Third Embodiment)

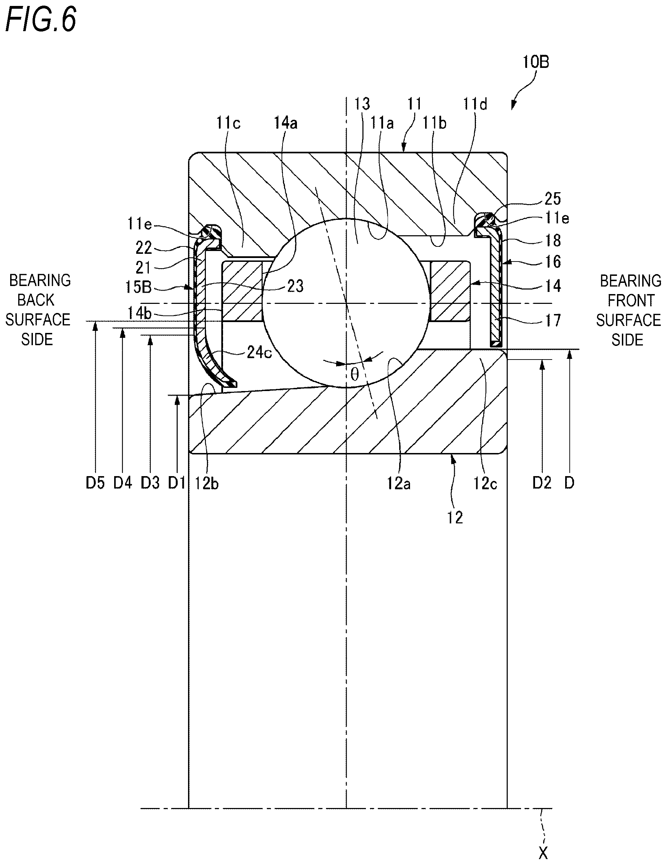

Fig. 6 is a cross-sectional view of an angular contact ball bearing according to a third embodiment. A shape of a sealing member 15B on the bearing back surface side of an angular contact ball bearing 10B according to the third embodiment is different from that of the angular contact ball bearing 10 according to the first embodiment. Since other parts are the same as those of the angular contact ball bearing 10 according to the first embodiment, the same parts are denoted by the same or corresponding reference numerals, and the description thereof will be simplified or omitted.

In the sealing member 15B according to the third embodiment, an inclined portion 24c is bent in a curved shape so as to be formed as an annular curved surface that is inclined inward in the radial direction from the disk portion 23 toward an axial center of the angular ball bearing 10B. The maximum diameter D3 of the inclined portion 24c on the axial direction outer surface side (a left side surface in Fig. 6) of the sealing member 15 (the diameter D3 of the circle at a boundary point between the disk portion 23 and the inclined portion 24c on the axial direction outer surface side) is larger than the outer diameter D of the shoulder portion 12c on the bearing front surface side of the inner ring 12. The maximum diameter D4 of the inclined portion 24c on the axial direction inner surface side of the sealing member 15B (the diameter D4 of a circle at a boundary point between the disk portion 23 and the inclined portion 24c on the axial direction inner surface side) is smaller than the inner diameter D5 of the bearing back surface side end surface 14b of the cage 14.

Accordingly, even when the sealing member 15B is deformed or inclined in the axial direction, the sealing member 15B can be prevented from interfering with the inner ring 12 of the other adjacent angular contact ball bearing 10 disposed in tandem on the bearing back surface side, the annular member such as the inner ring spacer or the oil seal, the step portion of the rotating shaft, or the cage 14 of the angular contact ball bearing 10B, and the increase in the torque and the damage to the sealing member 15B can be prevented. The curved surface of the inclined portion 24c may be formed by a single curved surface or a combination of a plurality of curved surfaces.

### (Fourth Embodiment)

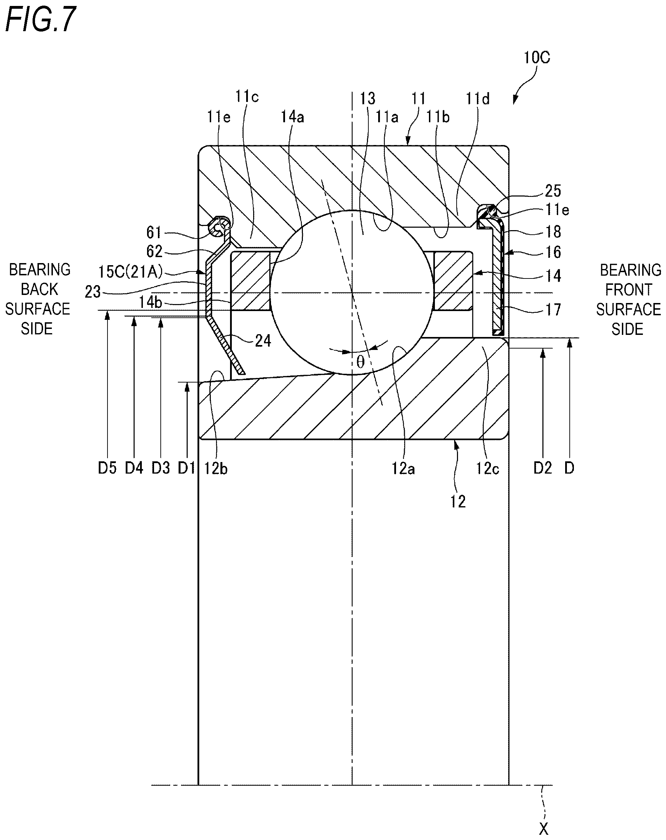

Fig. 7 is a cross-sectional view of an angular contact ball bearing according to a fourth embodiment. A shape of a sealing member 15C on the bearing back surface side of an angular contact ball bearing 10C according to the fourth embodiment is different from that of the angular contact ball bearing 10 according to the first embodiment. Since other parts are the same as those of the angular contact ball bearing 10 according to the first embodiment, the same parts are denoted by the same or corresponding reference numerals, and the description thereof will be simplified or omitted.

The sealing member 15C of the angular contact ball bearing 10C according to the fourth embodiment is a so-called shield plate 21A which is formed only of metal without including the elastic portion. The shield plate 21A includes: a curled portion 61, which is fixed to the outer ring 11 by being crimped to an attachment groove 11e formed in the shoulder portion 11c on the bearing back surface side of the outer ring 11; another inclined portion 62 that is inclined from an inner diameter side of the curled portion 61 toward an axial direction outer side of the angular contact ball bearing 10C; the disk portion 23, which extends in the radial direction from the inclined portion 62; and the annular inclined portion 24 inclined inward in the radial direction from the disk portion 23 toward the axial center of the angular contact ball bearing 10C.

The maximum diameter D3 of the inclined portion 24 on the axial direction outer surface side (a left side surface in Fig. 7) of the sealing member 15C is larger than the outer diameter D of the shoulder portion 12c on the bearing front surface side of the inner ring 12. The maximum diameter D4 of the inclined portion 24 on the axial direction inner surface side of the sealing member 15C is smaller than the inner diameter D5 of the bearing back surface side end surface 14b of the cage 14.

Accordingly, even when the sealing member 15C is deformed or inclined in the axial direction, the sealing member 15C can be prevented from interfering with the inner ring 12 of the other adjacent angular contact ball bearing 10C disposed in tandem on the bearing back surface side, the annular member such as the inner ring spacer or the oil seal, the step portion of the rotating shaft, or the cage 14 of the angular contact ball bearing 10, and the increase in the torque and the damage to the sealing member 15C can be prevented.

### (Fifth Embodiment)

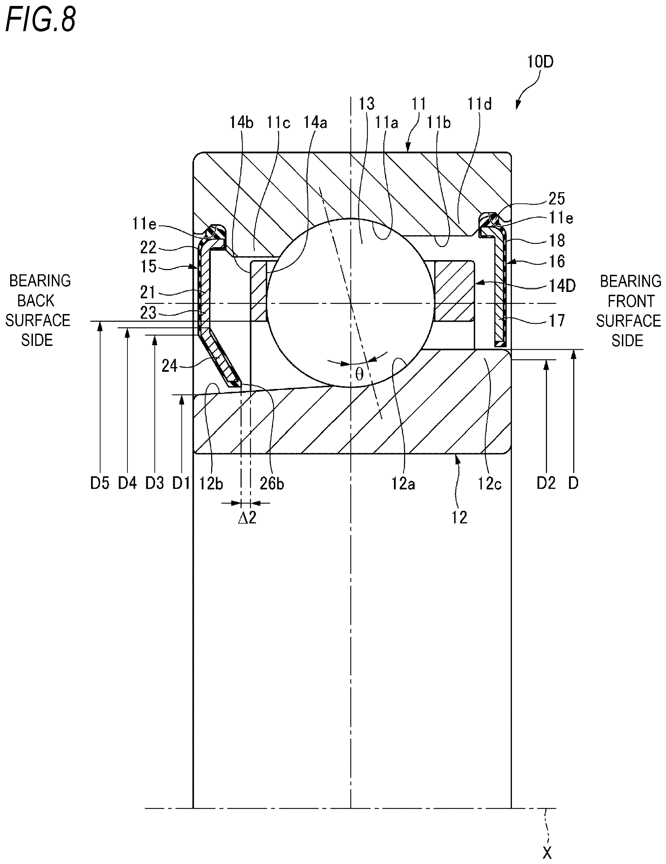

Fig. 8 is a cross-sectional view of an angular contact ball bearing according to a fifth embodiment. A shape of a cage 14D of an angular contact ball bearing 10D according to the fifth embodiment is different from that of the angular contact ball bearing 10 according to the first embodiment. Since other parts are the same as those of the angular contact ball bearing 10 according to the first embodiment, the same parts are denoted by the same or corresponding reference numerals, and the description thereof will be simplified or omitted.

The outer ring guide cage 14D of the angular contact ball bearing 10D according to the fifth embodiment is formed such that at least an axial direction length on the bearing back surface side is short, so that the bearing back surface side end surface 14b of the cage 14D and the bearing front surface side end portion 26b of the lip portion 26 are separated from each other in the axial direction with a clearance Δ2 provided therebetween (Δ2 > 0).

As described above, since the sealing member 15 is separated from the outer ring guide cage 14D, the grease pushed out from the outer ring guide cage 14D is unlikely to adhere to the inner surface of the sealing member 15, in other words, an opening portion of the labyrinth, and grease leakage from the labyrinth is reduced.

If there is no problem of strength, the axial direction length of the annular portion on the bearing front surface side may be shortened to substantially the same as the axial direction length of the annular portion on the bearing back surface side in the cage 14D. In this way, the volume of bearing space can be increased, and a lubrication life can be improved by increasing an amount of grease.

### (Sixth Embodiment)

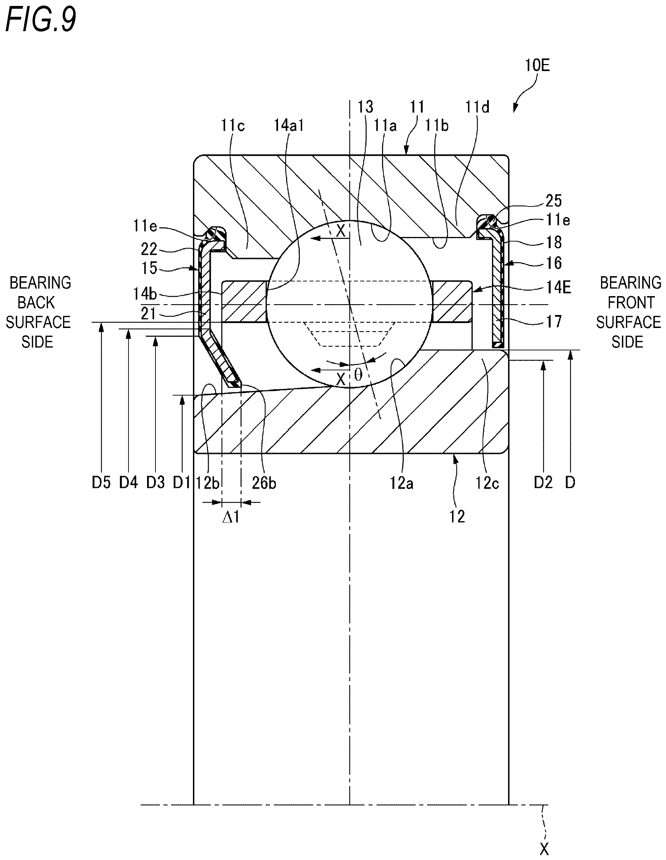

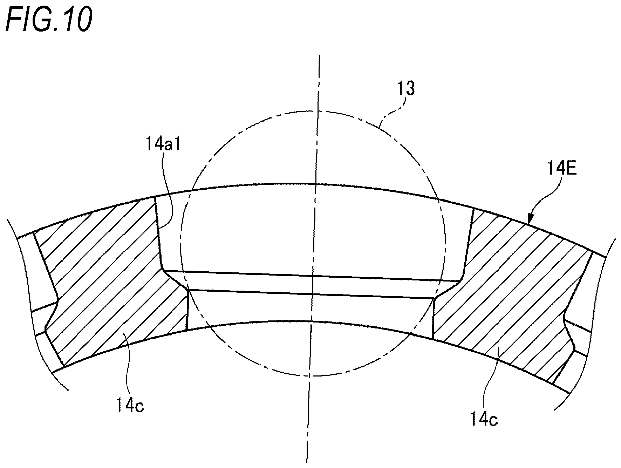

Fig. 9 is a cross-sectional view of an angular contact ball bearing according to a sixth embodiment, and Fig. 10 is a cross-sectional view taken along X-X of Fig. 9. A cage 14E of an angular contact ball bearing 10E according to the sixth embodiment is different from that of the angular contact ball bearing 10 according to the first embodiment. Since other parts are the same as those of the angular contact ball bearing 10 according to the first embodiment, the same parts are denoted by the same or corresponding reference numerals, and the description thereof will be simplified or omitted.

The angular contact ball bearing 10E according to the sixth embodiment includes a ball guide cage 14E guided by the plurality of balls 13 which are rotatably disposed in a pocket 14a1. As shown in Fig. 10, a protruding portion 14c constituting the pocket 14a1 is provided on an inner peripheral surface of a pillar portion of the ball guide cage 14E. In this case, similarly to the angular contact ball bearing 10 according to the first embodiment, the bearing back surface side end surface 14b of the cage 14E and the bearing front surface side end portion 26b of the lip portion 26 overlap each other by Δ1 when viewed from the radial direction (Δ1 ≧ 0). Therefore, since the grease pushed out from the cage 14E and adhering to the inner surface of the sealing member 15 is close to the rolling contact portion, the lubricating oil components of the grease can be easily supplied to the rolling contact portion, thereby improving the lubrication performance.

### (Seventh Embodiment)

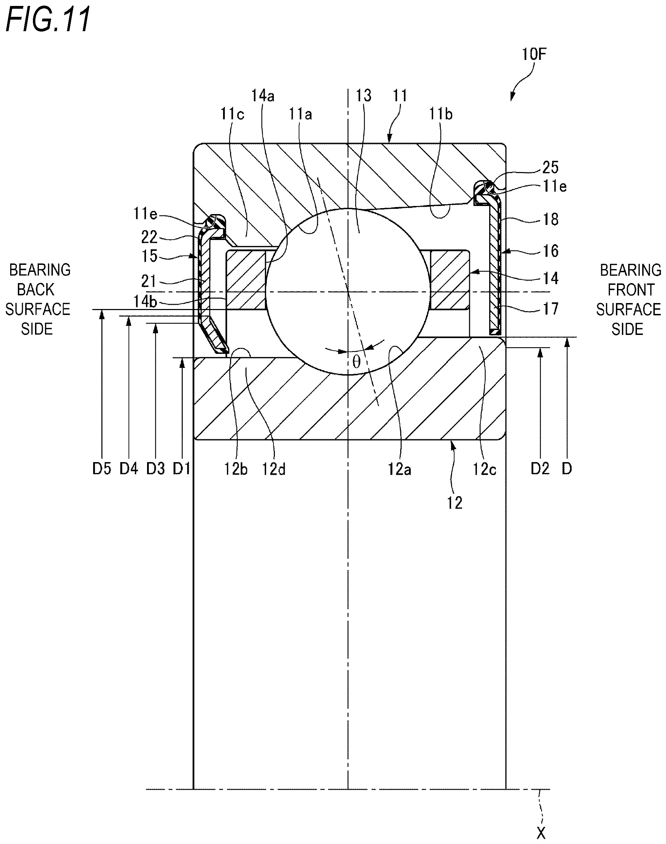

Fig. 11 is a cross-sectional view of an angular contact ball bearing according to a seventh embodiment. Shapes of the outer ring 11 and the inner ring 12, and shapes of the sealing members 15, 16 of an angular contact ball bearing 10F according to the seventh embodiment is different from that of the angular contact ball bearing 10 according to the first embodiment. Since other parts are the same as those of the angular contact ball bearing 10 according to the first embodiment, the same parts are denoted by the same or corresponding reference numerals, and the description thereof will be simplified or omitted.

The outer ring 11 of the angular contact ball bearing 10F according to the seventh embodiment is formed with a tapered-shaped counter bore 11b whose diameter increases toward an axial direction end portion on the bearing front surface side with respect to the outer ring raceway surface 11a. The inner ring 12 is formed with the counter bore 12b having a substantially uniform outer diameter on the bearing back surface side with respect to the inner ring raceway surface 12a, and the minimum outer diameter D1 of the counter bore 12b (that is, an outer diameter of a shoulder portion 12d on the bearing back surface side) is smaller than the outer diameter D of the shoulder portion 12c provided on the bearing front surface side. For this reason, as compared with the angular contact ball bearing 10 according to the first embodiment shown in Fig. 1, an outer diameter of the sealing member 16 is large, and an inner diameter of the sealing member 15 is large.

However, in the present embodiment, the maximum diameter D4 of the inclined portion 24 on the axial direction inner surface side of the sealing member 15 is also smaller than the inner diameter D5 of the bearing back surface side end surface 14b of the cage 14, and the maximum diameter D3 of the inclined portion 24 on the axial direction outer surface side of the sealing member 15 is also larger than the outer diameter D of the shoulder portion 12c on the bearing front surface side of the inner ring 12 of the angular contact ball bearing 10F, so that the same effect as that of the first embodiment can be obtained.

### (Eighth Embodiment)

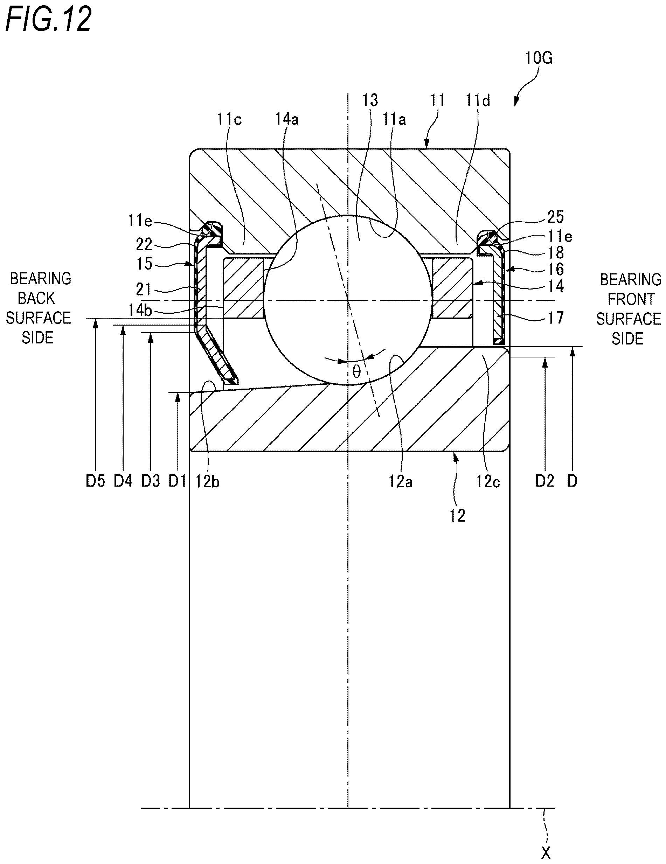

Fig. 12 is a cross-sectional view of an angular contact ball bearing according to an eighth embodiment. A shape of the outer ring 11 and a shape of the sealing member 16 of an angular contact ball bearing 10G according to the eighth embodiment is different from that of the angular contact ball bearing 10 according to the first embodiment. Since other parts are the same as those of the angular contact ball bearing 10 according to the first embodiment, the same parts are denoted by the same or corresponding reference numerals, and the description thereof will be simplified or omitted.

In the angular contact ball bearing 10G according to the eighth embodiment, the counter bore 12b is formed only in the inner ring 12. For this reason, the outer ring 11 has the same diameter as inner diameters of the shoulder portion 11c on the bearing back surface side and the shoulder portion 11d on the bearing front surface side. For this reason, as compared with the angular contact ball bearing 10 according to the first embodiment shown in Fig. 1, the outer diameter of the sealing member 16 is small.

However, in the present embodiment, the maximum diameter D4 of the inclined portion 24 on the axial direction inner surface side of the sealing member 15 is also smaller than the inner diameter D5 of the bearing back surface side end surface 14b of the cage 14, and the maximum diameter D3 of the inclined portion 24 on the axial direction outer surface side of the sealing member 15 is also larger than the outer diameter D of the shoulder portion 12c on the bearing front surface side of the inner ring 12 of the angular contact ball bearing 10G, so that the same effect as that of the first embodiment can be obtained.

### (First Modification of Bearing Device)

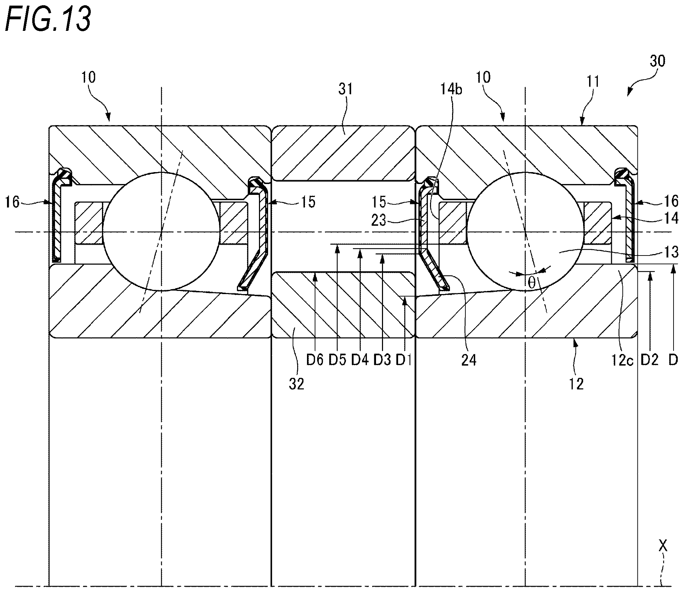

Fig. 13 is a cross-sectional view of a first modification of the bearing device in which the pair of angular contact ball bearings according to the first embodiment is combined in back-to-back arrangement via an outer ring spacer 31 and an inner ring spacer 32. In Fig. 13, an outer diameter D6 of the inner ring spacer 32 is larger than the minimum outer diameter D1 of the counter bore 12b and is equal to or smaller than the outer diameter D of the shoulder portion 12c provided on the bearing front surface side. The maximum diameter D3 of the inclined portion 24 on the axial direction outer surface side of the sealing member 15 is larger than the outer diameter D6 of the inner ring spacer 32. The maximum diameter D4 of the inclined portion 24 on the axial direction inner surface side of the sealing member 15 is smaller than the inner diameter D5 of the bearing back surface side end surface 14b of the cage 14.

Accordingly, even when the sealing member 15 is deformed or inclined in the axial direction, the sealing member 15 does not interfere with the inner ring spacer 32. Further, the interference between the sealing member 15 and the cage 14 of the angular contact ball bearing 10 is also prevented.

As described above, according to the bearing device 30 according to the first modification, the angular contact ball bearing 10 and the inner ring spacer 32, which is adjacent to the bearing back surface side of the angular contact ball bearing 10, are provided, the maximum diameter D3 of the inclined portion 24 on the axial direction outer surface side of the sealing member 15 is larger than the outer diameter D6 of the inner ring spacer 32, and the maximum diameter D4 of the inclined portion 24 on the axial direction inner surface side of the sealing member is smaller than the inner diameter D5 of the bearing back surface side end surface 14b of the cage 14. For this reason, even when the sealing member 15 is deformed or inclined in the axial direction, interference between the sealing member 15 and the inner ring spacer 32 and interference between the sealing member 15 and the cage 14 of the angular contact ball bearing 10 can be prevented, and the increase in the torque and the damage to the sealing member 15 caused by the interference can be prevented.

### (Second Modification of Bearing Device)

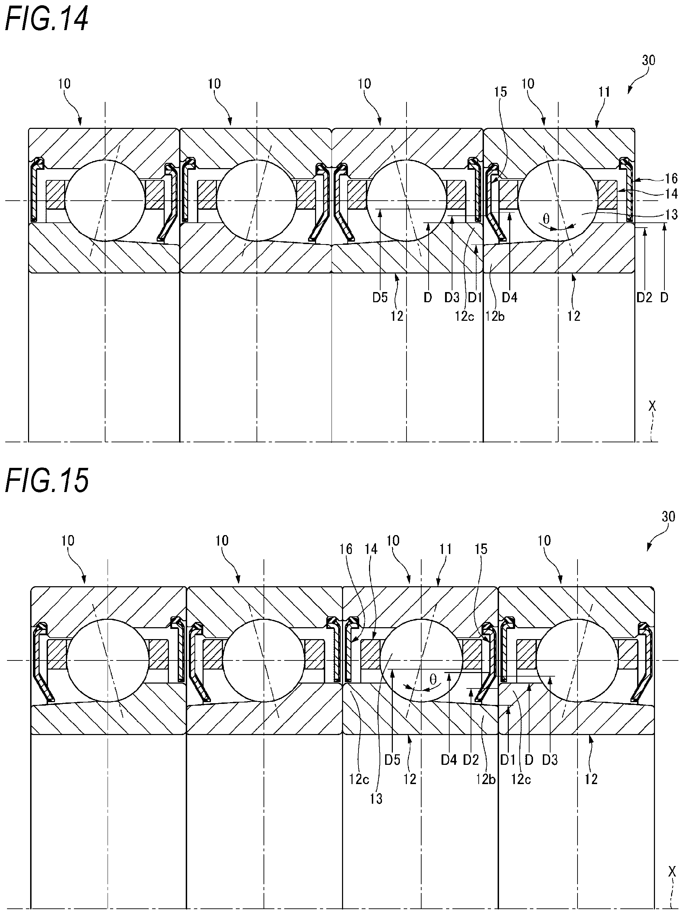

Fig. 14 is a cross-sectional view of a second modification of the bearing device. This modification provides a four-row combination (DBB) bearing device in which two sets of the tandem-combined angular contact ball bearings according to the first embodiment are prepared, and the respective sets of angular ball bearings are combined in back-to-back arrangement to apply a fixed position preload.

In each angular contact ball bearing 10 constituting the bearing device 30, as for the sealing member 15 disposed on the bearing back surface side, the maximum diameter D3 of the inclined portion 24 on the axial direction outer surface side of the sealing member 15 is larger than the outer diameter D of the shoulder portion 12c on the bearing front surface side of the inner ring 12 of the angular contact ball bearing 10 (a center side in Fig. 14) disposed on the back surface side. The maximum diameter D4 of the inclined portion 24 on the axial direction inner surface side of the sealing member 15 is smaller than the inner diameter D5 of the bearing back surface side end surface 14b of the cage 14.

Accordingly, even when the sealing member 15 of the angular contact ball bearing 10 disposed on the axial direction outer side (left and right sides in Fig. 14) is deformed or inclined in the axial direction, the sealing member 15 does not interfere with the inner ring 12 of the angular contact ball bearing 10 disposed on the bearing back surface side. Further, the interference between the sealing member 15 and the cage 14 of the angular contact ball bearing 10 is prevented, and the increase in the torque and the damage to the sealing member caused by the interference can be prevented.

Although the four-row combination (DBB) bearing device has been described in the above description, the present invention is not limited to the four-row combination, and a three-row combination (DBD) can also be employed.

### (Third Modification of Bearing Device)

Fig. 15 is a cross-sectional view of a third modification of the bearing device. This modification provides a four-row combination (DFF) bearing device in which two sets of the tandem-combined angular contact ball bearings according to the first embodiment are prepared, and the respective sets of angular ball bearings are combined in face-to-face arrangement to apply a fixed position preload.

In this case, in each angular contact ball bearing 10 constituting the bearing device 30, as for the sealing member 15 disposed on the bearing back surface side, the maximum diameter D3 of the inclined portion 24 on the axial direction outer surface side of the sealing member 15 is also larger than the outer diameter D of the shoulder portion 12c on the bearing front surface side of the inner ring 12 of the angular contact ball bearing 10 (left and right sides in Fig. 15) disposed on the back surface side. The maximum diameter D4 of the inclined portion 24 on the axial direction inner surface side of the sealing member 15 is smaller than the inner diameter D5 of the bearing back surface side end surface 14b of the cage 14.

Accordingly, even when the sealing member 15 of the angular contact ball bearing 10 disposed on the axial direction inner side (a center of the axial direction in Fig. 15) is deformed or inclined in the axial direction, the sealing member 15 does not interfere with the inner ring 12 of the angular contact ball bearing 10 disposed on the bearing back surface side. Further, the interference between the sealing member 15 and the cage 14 of the angular contact ball bearing 10 is prevented, and the increase in the torque and the damage to the sealing member caused by the interference can be prevented.

Although the four-row combination (DFF) bearing device has been described in the above description, the present invention is not limited to the four-row combination, and a three-row combination (DFD) can also be employed.

### (First Modification of Spindle device)

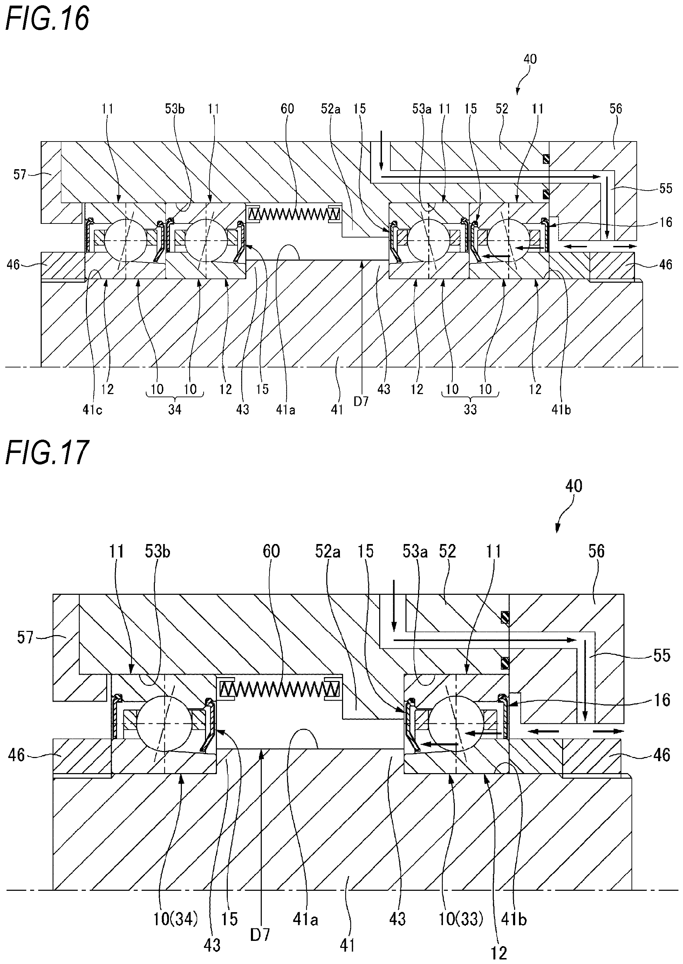

Fig. 16 is a main part cross-sectional view of a first modification of the spindle device in which a pair of angular contact ball bearings combined in tandem is combined in back-to-back arrangement as a front bearing and a rear bearing.

The spindle device 40 according to the first modification includes: a front bearing 33 which is disposed between the rotating shaft 41 and the housing 52 and supports a front end portion of the rotating shaft 41 (a right side in Fig. 16); and a rear bearing 34 that supports a rear end portion of the rotating shaft 41 (a left side in Fig. 16). The front bearing 33 and the rear bearing 34 are each configured by a pair of angular contact ball bearings 10 which are combined in tandem.

The pair of angular contact ball bearings 10 of the front bearing 33 are arranged such that the bearing back surface side thereof faces a rear side of the rotating shaft 41, and the pair of angular contact ball bearings 10 of the rear bearing 34 are arranged such that the bearing back surface side thereof faces a front side of the rotating shaft 41. That is, the front bearing 33 and the rear bearing 34 are arranged in back-to-back combination.

The rotating shaft 41 is provided with a large diameter portion 41a substantially at a center thereof in the axial direction, the inner ring 12 of the front bearing 33 is fitted to a shaft portion 41b in front of the large diameter portion 41a, and the inner ring 12 of the rear bearing 34 is fitted to a shaft portion 41c behind the large diameter portion 41a. Each inner ring 12 of the front bearing 33 and the rear bearing 34 is positioned at an axial direction position by the step portion 43 of the large diameter portion 41a and a nut 46 screwed to the rotating shaft 41. An outer diameter D7 of the step portion 43 is larger than the minimum outer diameter D1 of the counter bore 12b, and is set to be equal to or smaller than the outer diameter D of the shoulder portion 12c provided on the bearing front surface side.

The housing 52 includes an inward flange portion 52a substantially at a center thereof in the axial direction. The outer ring 11 of the front bearing 33 is fitted into an attachment hole 53a in front of the inward flange portion 52a, and the outer ring 11 of the rear bearing 34 is fitted into an attachment hole 53b behind the inward flange portion 52a.

The outer ring 11 of the front bearing 33 is positioned at an axial direction position by the inward flange portion 52a and the front outer ring retainer 56 attached to the housing 52. A plurality of compression springs 60 are arranged at predetermined intervals in a circumferential direction between the outer ring 11 of the rear bearing 34 and the inward flange portion 52a. A rear outer ring retainer 57 is disposed behind the outer ring 11 of the rear bearing 34. Accordingly, the front bearing 33 and the rear bearing 34 are combined in back-to-back arrangement and applied with a constant pressure preload by an elastic force of the compression spring 60.

The air flow path for air purge 55, which is opened in space between the housing 52 and the rotating shaft 41 and supplies air from the outside, is formed in the housing 52 and the front outer ring retainer 56 on the bearing front surface side of the angular contact ball bearing 10 of the front bearing 33.

A part of the air supplied from the air flow path 55 to the space between the housing 52 and the rotating shaft 41 flows from the bearing front surface side toward the bearing back surface side of the angular contact ball bearing 10 of the front bearing 33. For this reason, the sealing member 15 attached to the bearing back surface side may be deformed or inclined in the axial direction due to the air flowing into the front bearing 33.

However, as for the sealing member 15 on the bearing back surface side, the maximum diameter D3 of the inclined portion 24 on the axial direction outer surface side of the sealing member 15 is larger than the outer diameter D of the shoulder portion 12c on the bearing front surface side of the inner ring 12 of the angular contact ball bearing 10 disposed on the back surface side, and is larger than the outer diameter D7 of the step portion 43 of the rotating shaft 41. Therefore, even when the sealing member 15 is deformed or inclined in the axial direction, the sealing member 15 does not interfere with the inner ring 12 of the angular contact ball bearing 10 disposed on the bearing back surface side and the step portion 43 of the rotating shaft 41. Further, since the maximum diameter D4 of the inclined portion 24 on the axial direction inner surface side of the sealing member 15 is smaller than the inner diameter D5 of the bearing back surface side end surface 14b of the cage 14, even when the sealing member 15 is deformed or inclined in the axial direction, the interference between the sealing member 15 and the cage 14 of the angular contact ball bearing 10 can be prevented, and the increase in the torque and the damage to the sealing member 15 caused by the interference can be prevented.

As described above, according to the first modification of the spindle device 40, the front bearing 33 and the rear bearing 34, in which the angular contact ball bearings 10 according to the first embodiment are combined in tandem, are combined in back-to-back arrangement with the constant pressure preload, and the air flow path 55 is opened in the space between the housing 52 and the rotating shaft 41 in the housing 52 on the bearing front surface side of the front bearing 33 to supply the air from the outside. Accordingly, even when the sealing member 15 is deformed or inclined outward in the axial direction due to the air flowing from the air flow path 55 into the angular contact ball bearing 10 of the front bearing 33, the interference between the sealing member 15 and the inner ring 12 of the other adjacent angular contact ball bearing 10 and the interference between the sealing member 15 and the step portion 43 of the rotating shaft 41 are prevented. Further, even when the sealing member 15 is deformed or inclined inward in the axial direction, the interference between the sealing member 15 and the cage 14 of the angular contact ball bearing 10 is prevented. Accordingly, the increase in the torque and the damage to the sealing member 15 caused by the interference can be prevented.

### (Second Modification of Spindle device)

Fig. 17 is a cross-sectional view of a second modification of the spindle device in which the front bearing 33 configured by the single angular contact ball bearing 10 and the rear bearing 34 configured by the single angular contact ball bearing 10 are combined in back-to-back arrangement. In this case, the constant pressure preload is also applied to the front bearing 33 and the rear bearing 34 by the elastic force of the compression spring 60.

Other portions are the same as those of the first modification of the spindle device shown in Fig. 16, and the same effects can be obtained.

The present invention is not limited to the embodiments and the modifications described above, and modifications, improvements, and the like can be made as appropriate.

Although the pair of sealing members 15, 16 are attached to the two sides in the axial direction in the above embodiments, the present invention is not limited thereto, and the present invention also includes a case where the sealing member 15 is attached only to the bearing back surface side.

This application is based on JP-A-2017-168552 filed on September 1, 2017, and JP-A-2018-008244 filed on January 22, 2018.

### Reference Signs List

10, 10A, 10B, 10C, 10D, 10E, 10F, 10G Angular Contact Ball Bearing
11 Outer Ring
11a Outer Ring Raceway Surface
12 Inner Ring
12a Inner Ring Raceway Surface
12b Counter Bore
13 Ball
14 Cage
14b Bearing Back Surface Side End Surface
14D Outer Ring Guide Cage (Cage)
14E Ball Guide Cage (Cage)
15, 15A, 15B, 15C Sealing Member
23 Disk Portion
24 Inclined Portion
24a First Inclined Portion (Inclined Portion)
24b Second Inclined Portion (Inclined Portion)
30 Bearing Device
32 Inner Ring Spacer (Annular Member)
33 Front Bearing
34 Rear Bearing
40 Spindle device
41 Rotating Shaft
43 Step Portion
52 Housing
55 Air Flow Path
D Outer Diameter of Shoulder Portion of Inner Ring on Bearing Front Surface Side
D1 Minimum Outer Diameter of Counter Bore
D3 Maximum Diameter of Inclined Portion on Axial Direction Outer Surface Side of Sealing Member
D4 Maximum Diameter of Inclined Portion on Axial Direction Inner Surface Side of Sealing Member
D5 Inner Diameter of Bearing Back Surface Side End Surface of Cage
D6 Outer Diameter of Inner Ring Spacer (Outer Diameter of Annular Member)
D7 Outer Diameter of Step Portion
θ Contact Angle

## Claims

1. An angular contact ball bearing (10)comprising:
an outer ring (11) which includes an outer ring raceway surface (11a) on an inner peripheral surface thereof;
an inner ring (12) which includes an inner ring raceway surface (12a) on an outer peripheral surface thereof;
a plurality of balls (13) which are arranged rotatably with a predetermined contact angle (θ) between the outer ring raceway surface (11a) and the inner ring raceway surface (12a);
a cage (14) which is configured to hold the plurality of balls (13) rotatably; and
a non-contact type sealing member (15, 16) which is provided at least on a bearing back surface side and which is configured to cover an opening between the outer ring (11) and the inner ring (12),
wherein the inner ring (12) includes a counter bore (12b) which is formed on the bearing back surface side with respect to the inner ring raceway surface (12a), and a minimum outer diameter (D1) of the counter bore (12b) is smaller than an outer diameter (D) of a shoulder portion (12c) which is provided on a bearing front surface side with respect to the inner ring raceway surface (12a),
wherein the sealing member (15) fixed to the bearing back surface side of the outer ring (11) includes:
a disk portion (23); and
at least one annular inclined portion (24) inclined linearly or curvedly inward in a radial direction from the disk portion (23) toward an axial center of the angular contact ball bearing (10),
wherein a maximum diameter (D4) of the inclined portion (24) on an axial direction inner surface side of the sealing member (15) is smaller than an inner diameter (D5) of a bearing back surface side end surface (14b) of the cage (14), **characterized in that** a maximum diameter (D3) of the inclined portion (24) on an axial direction outer surface side of the sealing member (15) is larger than the outer diameter (D) of the shoulder portion (12c) on the bearing front surface side of the inner ring (12).

2. The angular contact ball bearing (10) according to claim 1, wherein the maximum diameter (D4) of the inclined portion (24) on the axial direction inner surface side of the sealing member (15) is larger than the maximum diameter (D3) of the inclined portion (24) on the axial direction outer surface side of the sealing member (15).

3. The angular contact ball bearing (10) according to claim 1 or 2, wherein the cage (14) and the inclined portion (24) of the sealing member (15) overlap each other when viewed from a radial direction.

4. The angular contact ball bearing (10) according to claim 1 or 2, wherein the cage (14) and the inclined portion (24) of the sealing member (15) are spaced apart from each other in an axial direction.

5. A bearing device (30) comprising a plurality of the angular contact ball bearings (10) according to any one of claims 1 to 4,
wherein the plurality of angular contact ball bearings (10) are combined in tandem.

6. The bearing device (30) according to claim 5, further comprising angular contact ball bearings which are combined in back-to-back arrangement with respect to the plurality of angular contact ball bearings (10) combined in tandem.

7. The bearing device (30) according to claim 5, further comprising-the angular contact ball bearings which are combined in face-to-face arrangement with respect to the plurality of angular contact ball bearings (10) combined in tandem.

8. A bearing device (30) comprising:
the angular contact ball bearing (10) according to any one of claims 1 to 4; and
an annular member (32) disposed adjacent to the bearing back surface side of the angular contact ball bearing (10),
wherein the maximum diameter (D3) of the inclined portion (24) on the axial direction outer surface side of the sealing member (15) is larger than an outer diameter (D6) of the annular member (32).

9. A spindle device (40) comprising:
the angular contact ball bearing (10) according to any one of claims 1 to 4; and
a rotating shaft (41) which includes a step portion (43) disposed adjacent to the bearing back surface side of the angular contact ball bearing (10),
wherein the maximum diameter (D3) of the inclined portion (24) on the axial direction outer surface side of the sealing member (15) is larger than an outer diameter (D7) of the step portion (43).

10. A spindle device (40) comprising:
a rotating shaft (41):
a housing (52): and
a front bearing and a rear bearing each including the angular contact ball bearing (10) according to any one of claims 1 to 4,
wherein the front bearing and the rear bearing are combined in back-to-back arrangement with a constant pressure preload, and
wherein the housing (52) is formed with an air flow path (55) which is opened in space between the housing (52) and the rotating shaft (41) on the bearing front surface side of the front bearing and which supplies air from an outside.

## Patentansprüche

1. Schrägkugellager (10), das umfasst:
einen Außenring (11), der eine Außenring-Laufbahnfläche (11a) an seiner Innenumfangsfläche einschließt;
einen Innenring (12), der eine Innenring-Laufbahnfläche (12a) an seiner Außenumfangsfläche einschließt;
eine Vielzahl von Kugeln (13), die mit einem vorgegebenen Kontaktwinkel (θ) drehbar zwischen der Außenring-Laufbahnfläche (11a) und der Innenring-Laufbahnfläche (12a) angeordnet sind;
einen Käfig (14), der so ausgeführt ist, dass er die Vielzahl von Kugeln (13) drehbar hält; sowie
ein kontaktloses Dichtungselement (15, 16), das wenigstens an einer Seite der hinteren Lagerfläche vorhanden ist und das so ausgeführt ist, dass es eine Öffnung zwischen dem Außenring (11) und dem Innenring (12) abdeckt,
wobei der Innenring (12) eine Senkbohrung (12b) enthält, die an der Seite der hinteren Lagerfläche in Bezug auf die Innenring-Laufbahnfläche (12a) ausgebildet ist, und ein minimaler Außendurchmesser (D1) der Senkbohrung (12b) kleiner ist als ein Außendurchmesser (D) eines Schulterabschnitts (12c), der an einer Seite der vorderen Lagerfläche in Bezug auf die Innenring-Laufbahnfläche (12a) vorhanden ist,
wobei das Dichtungselement (15), das an der Seite der hinteren Lagerfläche des Außenrings (11) befestigt ist, einschließt:
einen Scheibenabschnitt (23); und
wenigstens einen ringförmigen geneigten Abschnitt (24), der linear oder gekrümmt nach innen in einer radialen Richtung von dem Scheibenabschnitt (23) zu einem axialen Mittelpunkt des Schrägkugellagers (10) hin geneigt ist,
wobei ein maximaler Durchmesser (D4) des geneigten Abschnitts (24) an einer Seite einer in axialer Richtung innen liegenden Fläche des Dichtungselementes (15) kleiner ist als ein Innendurchmesser (D5) einer Endfläche (14b) an einer Seite der hinteren Lagerfläche des Käfigs (14), **dadurch gekennzeichnet, dass**
ein maximaler Durchmesser (D3) des geneigten Abschnitts (24) an einer Seite einer in axialer Richtung außen liegenden Fläche des Dichtungselementes (15) größer ist als der Außendurchmesser (D) des Schulterabschnitts (12c) an der Seite der vorderen Lagerfläche des Innenrings (12).

2. Schrägkugellager (10) nach Anspruch 1, wobei der maximale Durchmesser (D4) des geneigten Abschnitts (24) an der Seite der in axialer Richtung innen liegenden Fläche des Dichtungselementes (15) größer ist als der maximale Durchmesser (D3) des geneigten Abschnitts (24) an der Seite der in axialer Richtung außen liegenden Fläche des Dichtungselementes (15).

3. Schrägkugellager (10) nach Anspruch 1 oder 2, wobei der Käfig (14) und der geneigte Abschnitt (24) des Dichtungselementes (15) einander, in einer radialen Richtung gesehen, überlappen.

4. Schrägkugellager (10) nach Anspruch 1 oder 2, wobei der Käfig (14) und der geneigte Abschnitt (24) des Dichtungselementes (15) voneinander, in einer axialen Richtung gesehen, beabstandet sind.

5. Lagervorrichtung (30), die eine Vielzahl der Schrägkugellager (10) nach einem der Ansprüche 1 bis 4 umfasst,
wobei die Vielzahl von Schrägkugellagern (10) hintereinander kombiniert sind.

6. Lagervorrichtung (30) nach Anspruch 5, die des Weiteren Schrägkugellager umfasst, die in O-Anordnung in Bezug auf die Vielzahl hintereinander kombinierter Schrägkugellager (10) kombiniert sind.

7. Lagervorrichtung (30) nach Anspruch 5, die des Weiteren Schrägkugellager umfasst, die in X-Anordnung in Bezug auf die Vielzahl hintereinander kombinierter Schrägkugellager (10) kombiniert sind.

8. Lagervorrichtung (30), die umfasst:
die Schrägkugellager (10) nach einem der Ansprüche 1 bis 4, sowie
ein ringförmiges Element (32), das an die Seite der hinteren Lagerfläche des Schrägkugellagers (10) angrenzend angeordnet ist,
wobei der maximale Durchmesser (D3) des geneigten Abschnitts (24) an der Seite der in axialer Richtung außen liegenden Fläche des Dichtungselementes (15) größer ist als ein Außendurchmesser (D6) des ringförmigen Elementes (32).

9. Spindel-Vorrichtung (40), die umfasst:
die Schrägkugellager (10) nach einem der Ansprüche 1 bis 4, sowie
eine rotierende Welle (41), die einen Absatzabschnitt (43) einschließt, der an die Seite der hinteren Lagerfläche des Schrägkugellagers (10) angrenzend angeordnet ist,
wobei der maximale Durchmesser (D3) des geneigten Abschnitts (24) an der Seite der in axialer Richtung außen liegenden Fläche des Dichtungselementes (15) größer ist als ein Außendurchmesser (D7) des Absatzabschnitts (43).

10. Spindel-Vorrichtung (40), die umfasst:
eine rotierende Welle (41);
ein Gehäuse (52); sowie
ein vorderes Lager und ein hinteres Lager, die jeweils das Schrägkugellager (10) nach einem der Ansprüche 1 bis 4 enthalten,
wobei das vordere Lager und das hintere Lager in O-Anordnung mit einer konstanten Druckvorspannung kombiniert sind, und
das Gehäuse (52) mit einem Luftströmungsweg (55) versehen ist, der sich im Zwischenraum zwischen dem Gehäuse (52) und der rotierenden Welle (41) an der Seite der vorderen Lagerfläche des vorderen Lagers öffnet und der Luft von einer Außenseite zuführt.

## Revendications

1. Roulement à billes à contact oblique (10) comprenant :
une bague externe (11) qui inclut une surface de chemin de bague externe (11a) sur sa surface périphérique interne,
une bague interne (12) qui inclut une surface de chemin de bague interne (12a) sur sa surface périphérique externe,
une pluralité de billes (13) qui sont agencées pour pouvoir tourner avec un angle de contact prédéterminé (θ) entre la surface de chemin de bague externe (11a) et la surface de chemin de bague interne (12a),
une cage (14) qui est configurée pour maintenir la pluralité de billes (13) en rotation, et
un élément d'étanchéité de type sans contact (15, 16) qui est disposé au moins sur un flanc de surface arrière de roulement et qui est configuré pour recouvrir une ouverture située entre la bague externe (11) et la bague interne (12),
dans lequel la bague interne (12) inclut un contre alésage (12b) qui est formé sur le flanc de surface arrière de roulement par rapport à la surface de chemin de bague interne (12a), et le diamètre externe minimal (D1) du contre alésage (12b) est plus petit que le diamètre externe (D) d'un épaulement (12c) qui est disposé sur un flanc de surface avant de roulement par rapport à la surface de chemin de bague interne (12a),
dans lequel l'élément d'étanchéité (15), fixé à la surface arrière de roulement sur la bague externe (11), inclut :
une partie formant disque (23), et
au moins une partie inclinée annulaire (24) qui est inclinée de façon linéaire ou incurvée vers l'intérieur dans la direction radiale à partir de la partie formant disque (23) vers le centre axial du roulement à billes à contact oblique (10),
dans lequel le diamètre maximal (D4) de la partie inclinée (24) sur le flanc de surface interne de direction axiale de l'élément d'étanchéité (15) est plus petit que le diamètre interne (D5) d'une surface terminale du côté de surface arrière de roulement (14b) de la cage (14), **caractérisé en ce que** :
le diamètre maximal (D3) de la partie inclinée (24) sur le flanc de surface externe de direction axiale de l'élément d'étanchéité (15) est plus grand que le diamètre externe (D) de l'épaulement (12c) sur la surface avant de roulement de la bague interne (12).

2. Roulement à billes à contact oblique (10) selon la revendication 1, dans lequel le diamètre maximal (D4) de la partie inclinée (24) sur le flanc de surface interne de direction axiale de l'élément d'étanchéité (15) est plus grand que le diamètre maximal (D3) de la partie inclinée (24) sur le flanc de surface externe de direction axiale de l'élément d'étanchéité (15).

3. Roulement à billes à contact oblique (10) selon la revendication 1 ou la revendication 2, dans lequel la cage (14) et la partie inclinée (24) de l'élément d'étanchéité (15) se chevauchent lorsqu'on les regarde depuis une direction radiale.

4. Roulement à billes à contact oblique (10) selon la revendication 1 ou la revendication 2, dans lequel la cage (14) et la partie inclinée (24) de l'élément d'étanchéité (15) sont espacées l'une de l'autre dans la direction axiale.

5. Dispositif de roulement (30) comprenant une pluralité de roulements à billes à contact oblique (10) conformes à l'une quelconque des revendications 1 à 4,
dans lequel les différents roulements à billes à contact oblique (10) sont combinés en tandem.

6. Dispositif de roulement (30) selon la revendication 5, comprenant en outre des roulements à billes à contact oblique qui sont combinés dos à dos par rapport à la pluralité de roulements à billes à contact oblique (10) combinés en tandem.

7. Dispositif de roulement (30) selon la revendication 5, comprenant en outre des roulements à billes à contact oblique qui sont combinés face à face par rapport à la pluralité de roulements à billes à contact oblique (10) combinés en tandem.

8. Dispositif de roulement (30) comprenant :
le roulement à billes à contact oblique (10) conforme à l'une quelconque des revendications 1 à 4, et
un élément annulaire (30) disposé pour être contigu au flanc de surface arrière du roulement à billes à contact oblique (10),
dans lequel le diamètre maximal (D3) de la partie inclinée (24) sur le flanc de surface externe de direction axiale de l'élément d'étanchéité (15) est plus grand que le diamètre externe (D6) de l'élément annulaire (32).

9. Dispositif à broches (40) comprenant :
le roulement à billes à contact oblique (10) conforme à l'une quelconque des revendications 1 à 4, et
un arbre tournant (41) qui inclut un organe en échelon (43) disposé pour être contigu au flanc de surface arrière du roulement à billes à contact oblique (10),
dans lequel le diamètre maximal (D3) de la partie inclinée (24) sur le flanc de surface externe de direction axiale de l'élément d'étanchéité (15) est plus grand que le diamètre externe (D7) de l'organe en échelon (43).

10. Dispositif à broches (40) comprenant :
un arbre tournant (41),
une enveloppe (52), et
un enroulement avant et un enroulement arrière incluant chacun le roulement à billes à contact oblique (10) conforme à l'une quelconque des revendications 1 à 4,
dans lequel le roulement avant et le roulement arrière sont combinés dos à dos avec une précharge à pression constante, et
dans lequel l'enveloppe (52) est formée d'une voie d'écoulement d'air (55) qui est ouverte dans l'espace situé entre l'enveloppe (52) et l'arbre tournant (41) sur le flanc de surface avant du roulement avant et qui fournit de l'air provenant de l'extérieur.
